(19) Europäisches Patentamt
European Patent Office
Office européen des brevets

(11) **EP 1 948 952 B1**

(12) **EUROPÄISCHE PATENTSCHRIFT**

(45) Veröffentlichungstag und Bekanntmachung des Hinweises auf die Patenterteilung:
**25.03.2009 Patentblatt 2009/13**

(21) Anmeldenummer: **06828486.8**

(22) Anmeldetag: **25.10.2006**

(51) Int Cl.:
***F16D 48/06*** *(2006.01)*

(86) Internationale Anmeldenummer:
**PCT/DE2006/001817**

(87) Internationale Veröffentlichungsnummer:
**WO 2007/054051 (18.05.2007 Gazette 2007/20)**

(54) **VERFAHREN ZUM ERMITTELN EINER MOTORSPANNUNGSGRENZE EINES KUPPLUNGSSTELLMOTORS**

METHOD FOR THE DETERMINATION OF A VOLTAGE LIMIT OF A CLUTCH ACTUATING MOTOR

PROCEDE POUR DETERMINER UNE LIMITE DE TENSION D'UN MOTEUR DE COMMANDE D'EMBRAYAGE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **11.11.2005 DE 102005053866**

(43) Veröffentlichungstag der Anmeldung:
**30.07.2008 Patentblatt 2008/31**

(73) Patentinhaber: **LuK Lamellen und Kupplungsbau Beteiligungs KG**
**77815 Bühl (DE)**

(72) Erfinder:
• **BAEHR, Markus**
**77855 Achern (DE)**
• **GERHART, Jürgen**
**77767 Appenweier (DE)**
• **SCHUHEN, Michael**
**77830 Bühlertal (DE)**

(56) Entgegenhaltungen:
EP-A- 1 674 321          WO-A-01/63136
WO-A-03/074896          DE-A1- 19 823 089

**Beschreibung**

Die Erfindung betrifft ein Verfahren zum Ermitteln einer Motorspannungsgrenze eines Kupplungsstellmotors, bei der ein Kupplungsaktor eines automatisierten Schaltgetriebes bewegungslos bleibt. Außerdem betrifft die Erfindung eine Vorrichtung, mit der das Verfahren ausgeführt werden kann.

In automatisierten Schaltgetrieben, beispielsweise Parallelschaltgetrieben, werden Kupplungen verwendet, die im Notfall selbständig aufgehen müssen. Außer für Notfallsituationen dient die Selbstöffnung der Kupplungen auch dazu, dass eine Positionsreferenzierung der Kupplungsaktorik einfach möglich ist.

Diese Anforderung bringt es mit sich, dass getestet werden muss, ob die Teilkupplungssysteme bzw. Kupplungssysteme selbstöffnend sind und funktionsfähig sind.

Dazu ist es bekannt, direkt zu testen, beispielsweise durch Inkrementalwegsensoren, in welcher Position die Kupplungen sind.

Aus der DE 100 27 330 A1 ist es bekannt, eine Positionierung eines beweglich angeordneten Elements in einer Schalteinrichtung oder eines mit diesem gekoppelten Elements anhand sonstiger Kennwerte, wie beispielsweise anhand elektrischer Ströme oder dergleichen zu ermitteln. Um die Position bei einem solchen System genau bestimmen zu können, ist es erforderlich, die Grenzen, bis zu denen der Bewegungsaktor bei einer Aktorlast bewegungslos bleibt, genau zu bestimmen. Sind diese Grenzen nicht genau bekannt, so könnte dies zu Fehlern in der Positionsberechnung führen.

Weitere Verfahren sind aus WO 03074896, WO 0163136 und DE19823089 bekannt.

Davon ausgehend ist es Aufgabe der Erfindung, ein Verfahren vorzusehen, mit dem die Haltespannungsgrenzen für einen Kupplungsaktor genau bestimmt werden können.

Diese Aufgabe wird mit einem Verfahren mit den Merkmalen des Anspruchs 1 gelöst. Eine Vorrichtung, mit der das Verfahren ausgeführt werden kann, ist durch die Merkmale des Anspruchs 10 angegeben. Bevorzugte Ausführungsformen sind in den abhängigen Ansprüchen angegeben.

Das Verfahren zur Ermittlung von Haltespannungsgrenzen ist grundsätzlich für sowohl selbsthaltende als auch nicht selbsthaltende Aktoriken geeignet.

Der Grundgedanke der Erfindung liegt darin, in Fahrsituationen, in denen es für den Fahrkomfort nicht nachteilig ist, einen Kupplungsaktor zu bewegen, die Haltespannung durch Erhöhen oder Erniedrigen der Haltespannung ausgehend von einem aktuellen Haltespannungswert, bei welchem der Kupplungsaktor bewegungslos ist, zu verändern, und zu überprüfen ob bei der veränderten Haltespannung eine Bewegung des Kupplungsaktors erfasst werden kann. Die Fahrsituation, in welcher eine solche kleine, zusätzliche, nicht mit einem aktuellen Schaltvorgang ***** Aktorbewegung erlaubt werden kann, ist vorzugsweise eine Situation, in der eine Bewegung vom Aktor ohnehin verlangt wird. Nach einer bevorzugten Ausführungsform wird das Verfahren dann in einer solchen Situation durchgeführt, wenn gleichzeitig die Getriebesteuerung vorgibt, dass die Aktorbewegung, die verlangt wird, um eine kurze Zeitdauer verzögert werden darf, nämlich diejenige Zeitdauer, die für die Durchführung des Verfahrens zum Ermitteln, der Motorhaltespannungsgrenzen erforderlich ist.

Die Ausgangsposition des Aktors ist dabei eine, bei der sich der Aktor bevorzugter Weise bereits seit einer vorgegebenen Mindestzeit innerhalb seines vorherigen Ziels mit konstanter Sollposition, d.h. bewegungslos, befindet. Durch Vorgeben einer Mindestzeit vor dem Durchführen des Haltespannungsgrenztests, während der der Aktor bewegungslos ist, wird sichergestellt, dass sich der Aktor zum Zeitpunkt des Testbeginns nicht bewegt. Es wird dann statt der von Aktor angeforderten Bewegung zunächst das Verfahren zum Ermitteln einer Motorhaltespannungsgrenze ausgeführt und im unmittelbaren Anschluss an das Verfahren wird der normale Lageregler aktiviert, um die geforderte Aktorbewegung durchzuführen.

Nach einer bevorzugten Ausführungsform wird bei dem Verfahren zum Ermitteln von Haltespannungsgrehzen, wenn eine Bewegung des Kupplungsaktors bei der veränderten aktuellen Spannung erfasst wird, die augenblicklich aktuelle Spannung oder ein dieser zugeordneter Wert als neuer Haltespannungsgrenzwert adaptiert, d.h. von der Steuerung gemerkt.

Vorzugsweise werden die Schritte des Erhöhens oder Erniedrigens der Haltespannung um ein vorgegebenes Inkrement $\Delta U$ und das Erfassen, ob sich der Kupplungsaktor bei der veränderten Haltespannung bewegt, wiederholt, bis eine Bewegung des Kupplungsaktors erfasst werden kann und somit auf das Erreichen eines Haltespannungsgrenzwerts geschlossen werden kann.

Eine Bewegung des Kupplungsaktors wird vorzugsweise nur dann als Bewegung erfasst, wenn sich der Kupplungsaktor mehr als eine vorgegebene Mindeststrecke $\Delta x_{min}$ bewegt. Dadurch kann ausgeschlossen werden, dass bei kleinen Bewegungen, welche beispielsweise durch Vibrationen oder ähnliches hervorgerufen werden, fehlerhafter Weise auf ein Verlassen des Haltespannungsbereichs, d.h. eines Bereichs, in dem sich der Aktor nicht bewegt, geschlossen wird.

Bevorzugter Weise wird, nachdem die Haltespannung um ein Inkrement $\Delta U$ erhöht wurde, jeweils eine vorgegebene Zeit $\Delta t$ gewartet, ehe man abschließend bestimmt, dass keine Bewegung des Aktors vorliegt. Da gegebenenfalls eine bestimmte Zeit aufgrund der Trägheit der Komponenten verstreicht, ehe sich der Aktor bewegt, kann durch das Einhalten der Wartezeit $\Delta t$ ausgeschlossen werden, dass die Spannung einen Grenzwert erreicht hat, bei dem sich der Kupplungsaktor zu bewegen beginnt, ohne dass dies erfasst würde.

Die aktuelle Haltespannung, von der ausgegangen wird, und die jeweils um ein Inkrement ΔU erhöht bzw. erniedrigt wird, kann dabei eine beliebige Haltespannung bei stillstehendem Aktor sein. Ausgehend von dieser augenblicklichen Spannung wird zum Austasten eines oberen Haltespannungsgrenzwerts die Haltespannung schrittweise um Inkremente ΔU rampenartig erhöht, bis eine Bewegung des Kupplungsaktors erfasst werden kann. Zum Austasten eines unteren Haltespannungsgrenzwerts wird ausgehend von der augenblicklichen Haltespannung, welche als aktuelle Haltespannung verwendet wird, die Haltespannung schrittweise um Inkremente ΔU erniedrigt, bis sich der Aktor bewegt (negative Rampe). Bei dieser Art von Test, bis schließlich eine Grenzspannung erkannt werden kann, ist die Testdauer zu Beginn unbestimmt.

Nach einer anderen bevorzugten Ausführungsform wird als aktuelle Haltespannung $U_{act}$ eine bisher bekannte obere Haltespannungsgrenze $U_{up}$ oder eine bekannte untere Haltespannungsgrenze $U_{dn}$ festgelegt. Diese Haltespannungsgrenzen können aus vorherigen Verfahren oder aus Voreinstellungen bekannt sein und entsprechen einem Näherungswert für die Haltespannungsgrenze. Bei einer Überprüfung der Haltespannungsgrenzen bzw. zu einer Feinjustierung kann dann das Verfahren ausgeführt werden, wobei die bekannten oberen Haltespannungsgrenzen bzw. unteren Haltespannungsgrenzen als aktuelle Haltespannung $U_{act}$ gesetzt werden und davon ausgehend für die Feinjustierung der oberen Haltespannungsgrenze $U_{up}$ die aktuelle Haltespannung $U_{act}$ um ein Inkrement ΔU erhöht bzw. für das Feinjustieren der unteren Haltespannungsgrenze die aktuelle Haltespannung $U_{act}$ um das Inkrement ΔU erniedrigt wird. Zur Auswertung wird vorzugsweise bei diesem Verfahren die aktuelle Haltespannungsgrenze in jedem Fall verändert, nämlich wenn eine Bewegung erfasst wird und die obere Haltespannungsgrenze zu bestimmen war, wird die obere Haltespannung um einen Wert $U_{inc}$ erniedrigt, während sie in dem Fall, in dem keine Bewegung erfasst wird, um einen Wert $U_{inc}$ erhöht wird. Umgekehrt wird, wenn keine Bewegung erfasst wird, die untere Haltespannungsgrenze um einen Wert $U_{inc}$ erniedrigt, wenn keine Bewegung erfasst wird, während sie um einen Wert $U_{inc}$ erhöht wird, wenn eine Bewegung erfasst wird. Wenn eine Bewegung erfasst wird wird somit der Bereich zwischen $U_{dn}$ und $U_{up}$, in dem keine Aktorbewegung vorliegt, d.h. der Haltespannungsbereich, verkleinert, während er, wenn keine Bewegung erfasst wird, vergrößert wird. Somit ist bei dieser Art der Ausführung des Verfahrens die vorgegebene Testdauer im voraus bestimmbar, nämlich maximal der Wartezeit Δt zuzüglich der Initialisierung und Auswertung. Allerdings muss das Verfahren gegebenenfalls wiederholt werden, um zu absoluten Haltespannungsgrenzen zu gelangen.

Bei solchen bekannten Haltespannungsgrenzen, von denen ausgegangen wird, kann vorzugsweise das Spannungsinkrement, um das die Grenzwerte erhöht bzw. erniedrigt werden, im voraus abgeschätzt werden, vorzugsweise zu:

$$\Delta U = \frac{\Delta\rho}{\left(\frac{\Delta t}{k_e}\right)+\left(\frac{JR}{k_e^2 k_t}\right)\left(e^{-\Delta t \frac{k_e k_t}{JR}}-1\right)},$$

wobei Δt die zur Verfügung stehende Zeit ist, Δφ Positionsinkrementabstände sind, wobei vorzugsweise zwei Positionsinkrementwechsel beobachtet werden, $k_t= k_e$ eine Motorkonstante ist, R der elektrische Gesamtwiderstand aus dem Motorwiderstand, dem Widerstand der Zugleitungen und dem Widerstand der Ansteuerelektronik ist, und J das Massenträgheitsmoment von Motor und Aktorgetriebe ist. Die Testzeit Δt ist als ganzes Vielfaches der Lagereglerabtastzeit, beispielsweise 2,5 ms, festgelegt.

Zur Adaptierung des Haltespannungsgrenzwertes ist es möglich, die bekannten Spannungsgrenzwerte $U_{up}$, $U_{dn}$, ebenfalls mit diesem Inkrement ΔU = $U_{inc}$ zu verändern. Alernativ kann auch ein anderer fester Wert $U_{inc}$ für die adaptierte Haltespannungsgrenze nach dem Test eingesetzt werden. In jedem Fall wird es bevorzugt, unabhängig vom Ausgang des Tests die Kennfelder zu verändern, d.h. sowohl dann wenn eine Bewegung erfasst wird als auch dann, wenn keine Bewegung erfasst wird. Der Wert $U_{inc}$, um den die Haltespannungsgrenze nach dem Durchführen des Tests verändert wird, kann neben dem für den Test verwendeten Inkrement ΔU jeder andere beliebige Wert, insbesondere größer oder kleiner als das Inkrement ΔU, sein. Außerdem ist auch möglich, beim Erhöhen und beim Erniedrigen jeweils verschiedene Werte zu verwenden oder auch die Werte als prozentuale Werte beispielsweise von einem momentanen Absolutwert der bisherigen Haltespannungsgrenze anzugeben.

Nachfolgend wird die Erfindung beispielhaft anhand der beigefügten Figuren beschrieben, wobei

Fig. 1 ein Flussdiagramm für eine erste Ausführungsform der Erfindung zeigt; und

Fig. 2 ein Flussdiagramm für eine zweite Ausführungsform der Erfindung zeigt.

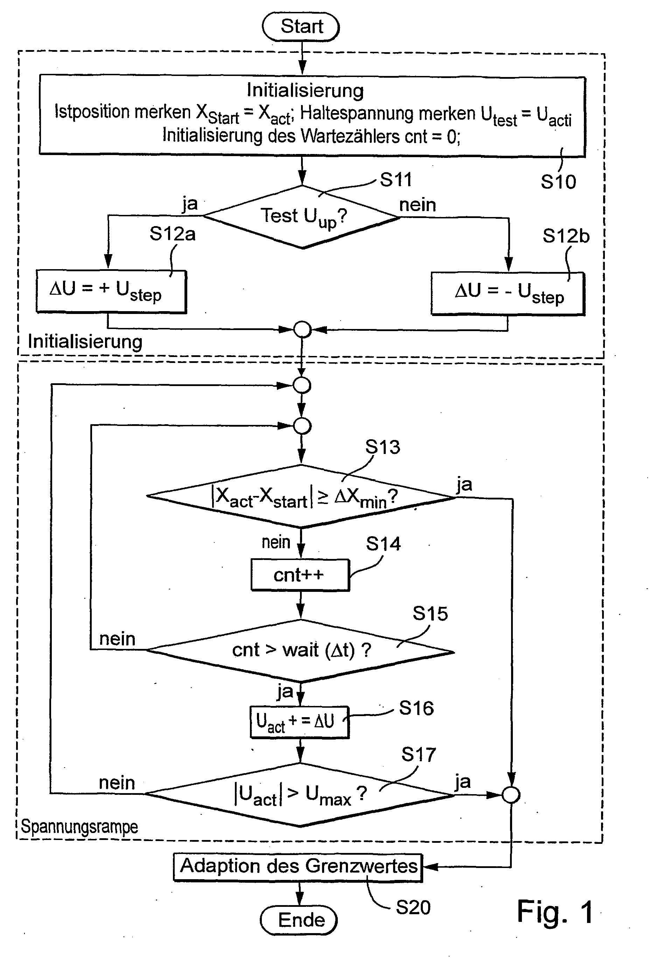

Bei der in Fig. 1 dargestellten Ausführungsform des Verfahrens zum Ermitteln einer Motorspannungsgrenze sind ein oberer Grenzwert oder ein unterer Grenzwert für die Haltespannung nicht bekannt bzw. werden ignoriert.

Wenn eine Kupplungssteuerung bzw. Getriebesteuerung erkennt, das ein Fahrzustand gegeben ist, in dem ein zeitlich unbestimmter Haltespannungsgrenztest ausgeführt werden kann, wird zunächst das Verfahren initialisiert. Dazu erfasst in Schritt S10 die Steuerung die aktuelle Ist-Position $X_{act}$ und merkt sie sich als $X_{start}$.

Ebenso wird die augenblickliche Spannung, bei der sich der Kupplungsaktor nicht bewegt, nämlich $U_{act}$ als Ausgangsspannung $U_{test}$ festgesetzt. Schließlich wird ein Wartezähler, der einen zeitlichen Ablauf überwacht, auf Null gesetzt: cnt = 0. Dieser Zähler ist beispielsweise mittels des Lagereglerinterrupts implementiert, so dass die Wartezeit durch Zählen Lageregleraufrufe bestimmt wird.

Nach der Initialisierung in Schritt S10 legt das Verfahren in Schritt S11 fest, ob eine obere Haltespannungsgrenze $U_{up}$ oder eine untere. Haltespannungsgrenze $U_{dn}$ ermittelt werden soll. Dies bedeutet, dass die Richtung des Haltespannungsgrenztests bestimmt wird. Vorzugsweise entspricht die Richtung, in der das Verfahren durchgeführt wird, derjenigen Richtung, in der eine angeforderte Bewegung des Kupplungsaktors unmittelbar im Anschluss an das Ausführen des Verfahrens erfolgt. Wenn eine obere Haltespannungsgrenze $U_{up}$ ermittelt werden soll, setzt das Verfahren in Schritt S12a ein Inkrement $\Delta U$ auf eine positive Schrittweite $+U_{step}$ fest. Andernfalls setzt das Verfahren in Schritt S12b das Inkrement $\Delta U$ auf eine negative Schrittweite $-U_{step}$ fest. Grundsätzlich können die Schrittweiten, anders als in der dargestellten Ausführungsform, auch unterschiedlich gewählt werden.

Nach der Initialisierung geht das Verfahren zum eigentlichen Haltespannungsgrenztest über, in dem eine Spannungsrampe angewendet wird und erfasst wird, wann sich der Kupplungsaktor zu bewegen beginnt.

Dazu wird zunächst, beispielsweise mittels Inkrementalwegsensoren, erfasst ob sich bei der augenblicklichen Spannung $U_{act}$ der Kupplungsaktor zu bewegen beginnt, indem die aktuelle Position $X_{act}$ mit der gemerkten Startposition $X_{start}$ verglichen wird. Wenn bei diesem Vergleich in Schritt S13 erkannt wird, dass die Veränderung größer als ein vorgegebener Grenzwert $\Delta x_{min}$ ist, erkennt das Verfahren, dass eine Haltespannungsgrenze erreicht ist und adaptiert den Grenzwert in Schritt S20. Mit der Adaption des Grenzwerts in Schritt S20 endet in diesem Fall das Verfahren.

Wenn in Schritt S13 keine Bewegung erkannt wird bzw. eine zu kleine Bewegung vorliegt, die unterhalb des Grenzwerts $\Delta x_{min}$ liegt, wird der Zähler cnt in Schritt S14 erhöht. In Schritt S15 wird bestimmt, ob eine Wartezeit $\Delta t$ bereits überschritten ist oder nicht. Wenn in Schritt S15 festgestellt wird, dass die Wartezeit noch nicht überschritten ist, die vorzugsweise in Abhängigkeit von der Trägheit des Systems und entsprechend dessen Beschleunigungsvermögen festgelegt ist, kehrt das Verfahren auf Schritt S13 zurück und überprüft abermals, ob eine Bewegung vorliegt. Diese Schleife wird so lange wiederholt, bis in Schritt S15 erkannt wird, dass eine maximale Wartezeit überschritten ist, d.h. Schritte S13, S14 und S15 werden innerhalb der vorgegebenen Wartezeit $\Delta t$ kontinuierlich wiederholt.

Bewegt sich der Aktor auch nach Ablauf der vollständigen Wartezeit in Schritt S15 nicht, so wird in Schritt S16 die aktuelle Haltespannungsgrenze erneut um das Inkrement $\Delta U$ erhöht bzw. erniedrigt. In Schritt S17 wird zunächst geprüft, ob die aktuelle Haltespannung unterhalb einer maximalen Haltespannung liegt. Wenn ein vorgegebener Maximalwert erreicht wird, endet das Verfahren ohne weiteres und die bisher erreichte aktuelle Spannung wird als Haltespannung in Schritt S20 adaptiert. Wenn der Grenzwert $U_{max,}$ der beispielsweise ein Grenzwert ist, der durch mechanische Anforderungen (Überlastzustände) vorgegeben sein kann, noch nicht erreicht ist, kehrt das Verfahren zu Schritt S13 zurück und beginnt, Schritte S13 bis S17 zu wiederholen.

Vorzugsweise ist die Rate der Spannungsrampe, d.h. $\Delta U$, verhältnismäßig gering gewählt, so dass ein fein justierter Haltespannungsgrenzwert am Ende des Grenzspannungstests adaptiert werden kann. Je feiner bzw. kleiner $\Delta U$ gewählt wird, desto länger dauert jedoch gegebenenfalls das Testverfahren, da bis zum Erreichen des Haltespannungsgrenzwerts mehr Zwischenpositionen durchlaufen werden.

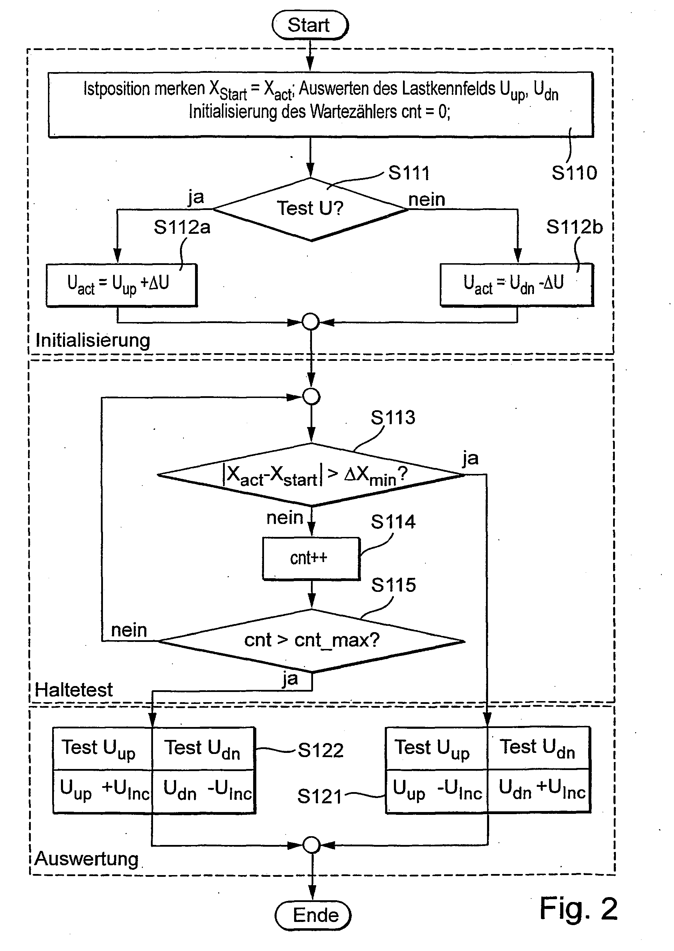

Eine alternative Ausführungsform des Verfahrens, bei der von bekannten bzw. angenommenen Grenzen für die Haltespannung $U_{up}$, $U_{dn}$ ausgegangen wird und bei dem überprüft wird, ob diese Grenzen zu weit oder zu eng gefasst sind, ist im Flussdiagramm von Fig. 2 dargestellt.

Zunächst wird, wenn die Steuerung feststellt, dass ein Durchführen des Haltespannungstests für den Fahrkomfort nicht nachteilig ist, da eine kleine Verzögerung der vorgesehen Aktorbewegung unerheblich ist, wiederum eine Initialisierung durchgeführt. Anders als bei dem in Verbindung mit Fig.1 beschriebenen Verfahren wird bei der Initialisierung in Schritt S110 nicht die aktuelle Haltespannung bei Stillstand des Aktors gemerkt sondern es wird das Lastkennfeld ausgewertet, insbesondere im Hinblick auf die bisherigen, beispielsweise angenommenen, Haltespannungsgrenzen $U_{up}$, $U_{down}$. Außerdem wird wiederum die Ist-Position gemerkt ($X_{start} = X_{act}$) und ein Wartezähler initialisiert (cnt = 0).

In Schritt S111 wird anschließend festgestellt, ob eine obere oder eine untere Haltespannungsgrenze justiert werden soll. Soll eine obere Haltespannungsgrenze justiert werden, so wird eine aktuelle Haltespannung $U_{act}$ auf die bisherige, angenommene obere Haltespannungsgrenze $U_{up}$ zuzüglich eines Inkrements $\Delta U$ in Schritt S112a festgelegt. Soll eine untere Haltespannungsgrenze justiert werden, so wird eine aktuelle Spannung $U_{act}$ als $U_{dn} - \Delta U$, d.h. der bisherigen unteren Haltespannüngsgrenze abzüglich eines Inkrements $\Delta U$ in Schritt S112b festgelegt.

Das Inkrement $\Delta U$ bzw. die Zusatzspannung $\Delta U$ kann im Voraus abgeschätzt werden anhand der Motorkonstante, des elektrischen Widerstands und des Massenträgheitsmoments von Motor und Aktorgetriebe. Diese Zusatzspannung entspricht einer Zusatzspannung, die erforderlich ist, um den Aktor in einer vorgegebenen, zur Verfügung stehenden Zeit $\Delta t$, ausgehend vom Stillstand, über ein bis zwei Positionsinkrementabstände

$\Delta\varphi$ zu bewegen. Alternativ ist es auch möglich, $\Delta U$ anhand von Erfahrungswerten festzulegen. $\Delta U$ kann außerdem für das Justieren der oberen Haltespannungsgrenze und der unteren Haltespannungsgrenze gleich oder verschieden festgelegt werden.

Nach der Initialisierung wird festgestellt, ob eine Bewegung des Aktors, bei der momentanen Spannung $U_{act}$ erfolgt. Dazu wird die aktuelle Position $X_{act}$ des Aktors mit der Startposition verglichen und die Differenz aus beiden Positionen in Schritt S113 mit einem Mindestbewegungsweg $\Delta X_{min}$ verglichen. Wenn eine Aktorbewegung erkannt wird, wird darauf geschlossen, dass die angenommenen Haltespannungsgrenzen zu weit gefasst sind, so dass in Schritt S121 bei einem Test bezüglich der oberen Haltespannungsgrenze $U_{up}$ diese um ein Inkrement $U_{inc}$ ausgehend vom bisherigen Wert verringert wird bzw. beim Test einer unteren Haltespannungsgrenze $U_{dn}$ der bisherige Wert um ein Inkrement $U_{inc}$ erhöht wird, so dass der Haltespannungsbereich insgesamt enger gefasst wird. Nach der Veränderung des Kennfelds in Schritt S121 endet in diesem Fall der Haltespannungstest.

Wird in Schritt S113 noch keine Bewegung festgestellt, so wird in Schritten S114, S115 entsprechend den Schritten S14 bzw. S15 aus Fig. 1 überprüft, ob eine Wartezeit $\Delta t$ bereits abgelaufen ist. Gegebenenfalls werden Schritte S113 bis S115 wiederholt, bis die Wartezeit in Schritt S115 als abgelaufen erkannt wird.

Wenn trotz abgelaufener Wartezeit keine Aktorbewegung in Schritt S113 erfasst wird, wird eine entsprechende Auswertung in Schritt S122, zusammen mit einer Adaption der Kennfelder, durchgeführt. Insbesondere wenn die obere Haltespannungsgrenze $U_{up}$ ausgetestet wurde und keine Bewegung des Aktors während der Haltezeit erfasst wurde, so wird darauf geschlossen, dass die Haltespannungsgrenzen bisher zu eng gefasst waren und eine obere Haltespannungsgrenze $U_{up}$ wird um ein Inkrement $U_{inc}$ erhöht, bzw. eine untere Haltespannungsgrenze $U_{dn}$ wird um ein Inkrement $U_{inc}$ erniedrigt, wenn die untere Haltespannungsgrenze ausgetestet wurde. Nach der Adaption der Kennfelder in Schritt S122 endet das Verfahren.

Die Inkremente $U_{inc}$ in Schritten S121, S122 können dabei dem Inkrement, um das die aktuelle, angenommene Haltespannungsgrenze in Schritten S112a und S112b erhöht bzw. erniedrigt wird, entsprechen oder aber sie können unabhängig von diesem Inkrement größer oder kleiner gefasst sein. Je kleiner das Inkrement $U_{inc}$ gewählt ist, desto feiner können die Haltespannungsgrenzen justiert werden. Andererseits nimmt die Gesamtdauer, bis man durch mehrmalige Wederholung des Verfahrens zu einem überprüften, absoluten Haltespannungsgrenzwert kommt, zu.

Der wesentliche Aspekt der Erfindung liegt somit darin, die Haltespannungsgrenzen durch Austesten der Haltespannung zu ermitteln.

**Patentansprüche**

1. Verfahren zum Ermitteln einer Motorgrenzspannung, bei der ein Kupplungsaktor eines automatisierten Schaltgetriebes bewegungslos bleibt, enthaltend die Schritte:

   (a) Erhöhen oder Erniedrigen der Haltespannung um ein Inkrement $\Delta U$ ausgehend von einer aktuellen Haltespannung ($U_{akt}$); und
   (b) Erfassen, ob sich der Kupplungsaktor bei der veränderten Haltespannung bewegt.

2. Verfahren nach Anspruch 1, **dadurch gekennzeichnet, dass** bei einer Bewegung des Kupplungsaktors die aktuelle Haltespannung als Haltespannungsgrenzwert adaptiert wird.

3. Verfahren nach einem der vorhergehenden Ansprüche, **dadurch gekennzeichnet, dass** Schritte (a) und (b) wiederholt werden, bis sich der Kupplungsaktor bewegt

4. Verfahren nach einem der vorhergehenden Ansprüche, **dadurch gekennzeichnet, dass** eine Bewegung des Kupplungsaktor nur dann als Bewegung in Schritt (b) erfasst wird, wenn sich der Kupplungsaktor mehr als eine vorgegebene Mindeststrecke $\Delta x_{min}$ bewegt.

5. Verfahren nach einem der vorhergehenden Ansprüche, **dadurch gekennzeichnet, dass** nach dem Erhöhen oder Erniedrigen der Haltespannung eine vorgegebene Zeit $\Delta t$ gewartet wird, ehe in Schritt (b) abschließend bestimmt wird, ob sich der Kupplungsaktor bewegt.

6. Verfahren nach einem der vorhergehenden Ansprüche, **dadurch gekennzeichnet, dass** die aktuelle Haltespannung $U_{akt}$ eine aktuelle Haltespannung bei stillstehendem Kupplungsaktor ist.

7. Verfahren nach Anspruch 6, **dadurch gekennzeichnet, dass** im Voraus festgelegt wird, ob eine obere oder eine untere Haltespannungsgrenze zu ermitteln ist; wenn eine oberen Haltespannungsgrenze ermittelt werden soll, die aktuelle Haltespannung $U_{akt}$ um das Inkrement $\Delta U$ in Schritt (a) erhöht wird; wenn eine untere Haltespannungsgrenze zu ermitteln ist, die aktuelle Haltespannung $U_{akt}$ um das Inkrement $\Delta U$ in Schritt (a) erniedrigt wird; und Schritte (a) und (b) ausgeführt werden, bis sich der Aktor bewegt.

8. Verfahren nach einem der Ansprüche 1 bis 5, **dadurch gekennzeichnet, dass** in Schritt (a) die aktuelle Haltespannung $U_{akt}$ als eine bekannte obere Haltespannungsgrenze $U_{up}$ oder als eine bekannte untere Haltespannungsgrenze $U_{dn}$ festgelegt wird; die aktuelle Haltespannung $U_{akt}$ um das Inkrement $\Delta U$ in Schritt (a) erhöht wird, wenn eine obere Haltespannungsgrenze $U_{up}$ zu bestimmen ist und die aktuelle Haltespannung $U_{akt}$ um das Inkrement $\Delta U$ in Schritt (a) erniedrigt wird, wenn eine untere Haltespannungsgrenze $U_{dn}$ zu bestimmen ist.

9. Verfahren nach Anspruch 8, **dadurch gekennzeichnet, dass** die obere Haltespannungsgrenze $U_{up}$ um einen Wert $U_{inc}$ erhöht wird oder die untere Haltespannungsgrenze $U_{dn}$ um einen Wert $U_{inc}$ erniedrigt wird, wenn in Schritt (b) keine Bewegung erfasst wird, und die obere Haltespannungsgrenze $U_{up}$ um einen Wert $U_{inc}$ erniedrigt wird oder die untere Haltespannungsgrenze $U_{dn}$ um einen Wert $U_{inc}$ erhöht wird, wenn in Schritt (b) eine Bewegung erfasst wird.

10. Vorrichtung zum Ermitteln einer Motorgrenzspannung, bei der ein Kupplungsaktor eines automatisierten Schaltgetriebes bewegungslos bleibt, mit einer Regelung, die dazu angepasst ist, das Verfahren nach einem der vorhergehenden Ansprüche auszuführen.

**Claims**

1. Method for determining a motor limiting voltage, in which a clutch actuator of an automated change speed gearbox remains motionless, containing the steps:

   (a) increasing or decreasing the holding voltage by an increment $\Delta U$ starting from a current holding voltage ($U_{act}$); and
   (b) sensing whether the clutch actuator moves when the holding voltage is changed.

2. Method according to Claim 1, **characterized in that** when the clutch actuator moves the current holding voltage is adapted as a holding voltage limiting value.

3. Method according to one of the preceding claims, **characterized in that** steps (a) and (b) are repeated until the clutch actuator moves.

4. Method according to one of the preceding claims, **characterized in that** a movement of the clutch actuator is sensed as a movement in step (b) only if the clutch actuator moves by more than a predefined minimum distance $\Delta x_{min}$.

5. Method according to one of the preceding claims, **characterized in that** after the holding voltage has been increased or decreased, the system waits for a predefined time $\Delta t$ until in step (b) it is finally determined whether the clutch actuator is moving.

6. Method according to one of the preceding claims, **characterized in that** the current holding voltage $U_{act}$ is a current holding voltage when the clutch actuator is stationary.

7. Method according to Claim 6, **characterized in that** it is defined in advance whether an upper or a lower holding voltage limit is to be determined, and if an upper holding voltage limit is to be determined, the current holding voltage $U_{act}$ is increased by the increment $\Delta U$ in step (a), and if a lower holding voltage limit is to be determined, the current holding voltage $U_{act}$ is decreased by the increment $\Delta U$ in step (a), and steps (a) and (b) are carried out until the actuator moves.

8. Method according to one of Claims 1 to 5, **characterized in that** in step (a) the current holding voltage $U_{act}$ is defined as a known upper holding voltage limit $U_{up}$ or as a known lower holding voltage limit $U_{dn}$, and the current holding voltage $U_{act}$ is increased by the increment $\Delta U$ in step (a) if an upper holding voltage limit $U_{up}$ is to be determined, and the current holding voltage $U_{act}$ is decreased by the increment $\Delta U$ in step (a) if a lower holding voltage limit $U_{dn}$ is to be determined.

9. Method according to Claim 8, **characterized in that** the upper holding voltage limit $U_{up}$ is increased by a value $U_{inc}$ or the lower holding voltage limit $U_{dn}$ is decreased by a value $U_{inc}$ if no movement is sensed in step (b), and the upper holding voltage limit $U_{up}$ is decreased by a value $U_{inc}$ or the lower holding voltage limit $U_{dn}$ is increased by a value $U_{inc}$ if a movement is sensed in step (b).

10. Device for determining a motor limiting voltage, in which a clutch actuator of an automated change speed gearbox remains motionless, comprising a controller which is adapted to carrying out the method according to one of the preceding claims.

**Revendications**

1. Procédé pour déterminer une tension limite de moteur, dans lequel un élément d'embrayage actif d'une boîte de vitesse à commande manuelle automatisée reste immobile, comprenant les étapes suivantes :

   (a) augmentation ou réduction de la tension de maintien d'un incrément $\Delta U$ en partant d'une tension de maintien actuelle ($U_{akt}$) ; et
   (b) détection d'un éventuel déplacement de l'élément d'embrayage actif lorsque la tension de maintien varie.

**2.** Procédé selon la revendication 1, **caractérisé en ce qu'**en cas de déplacement de l'élément d'embrayage actif, la tension de maintien actuelle est adaptée sous la forme de la valeur limite de tension de maintien.

**3.** Procédé selon l'une quelconque des revendications précédentes, **caractérisé en ce que** les étapes (a) et (b) sont répétées jusqu'à ce que l'élément d'embrayage actif bouge.

**4.** Procédé selon l'une quelconque des revendications précédentes, **caractérisé en ce qu'**un mouvement de l'élément d'embrayage actif n'est détecté comme mouvement lors de l'étape (b) que lorsque l'élément d'embrayage actif se déplace sur une distance supérieure à une distance minimale $\Delta x_{min}$ prédéfinie.

**5.** Procédé selon l'une quelconque des revendications précédentes, **caractérisé en ce qu'**après l'augmentation ou la réduction de la tension de maintien, on attend un temps $\Delta t$ prédéfini avant l'étape (b) pour voir si l'élément d'embrayage actif bouge.

**6.** Procédé selon l'une quelconque des revendications précédentes, **caractérisé en ce que** la tension de maintien Actuelle $U_{akt}$ correspond à une tension de maintien actuelle à l'arrêt de l'élément d'embrayage actif.

**7.** Procédé selon la revendication 6, **caractérisé en ce qu'**on définit à l'avance si une limite de tension de maintien supérieure ou inférieure doit être déterminée et si une limite de tension de maintien supérieure doit être déterminée, l'incrément $\Delta U$ est ajouté à la tension de maintien actuelle $U_{akt}$ à l'étape (a) ; si une limite de tension de maintien inférieure doit être déterminée, l'incrément $\Delta U$ est soustrait à la tension de maintien actuelle $U_{akt}$ à l'étape (a) ; et les étapes (a) et (b) sont réitérées jusqu'à ce que l'élément actif bouge.

**8.** Procédé selon l'une quelconque des revendications 1 à 5, **caractérisé en ce qu'**à l'étape (a), la tension de maintien actuelle $U_{akt}$ est déterminée sous la forme d'une limite de tension de maintien supérieure $U_{up}$ connue ou d'une limite de tension de maintien inférieure $U_{dn}$ connue ; l'incrément $\Delta U$ est ajouté à la tension de maintien actuelle $U_{akt}$ à l'étape (a) lorsqu'une limite de tension de maintien supérieure $U_{up}$ est déterminée et l'incrément $\Delta U$ est soustrait à la tension de maintien actuelle $U_{akt}$ à l'étape (a) lorsqu'une limite de tension de maintien inférieure $U_{dn}$ est déterminée.

**9.** Procédé selon la revendication 8, **caractérisé en ce qu'**une valeur $U_{inc}$ est ajoutée à la limite de tension de maintien supérieure $U_{up}$ ou **en ce qu'**une valeur $U_{inc}$ est soustraite à la limite de tension de maintien inférieure $U_{dn}$ lorsqu'aucun mouvement n'est détecté à l'étape (b) et que la valeur $U_{inc}$ est soustraite à la limite de tension de maintien supérieure $U_{up}$ ou la valeur $U_{inc}$ est ajoutée à la limite de tension de maintien inférieure $U_{dn}$ lorsqu'un mouvement est détecté à l'étape (b).

**10.** Dispositif pour déterminer une tension limite de moteur, dans lequel un élément d'embrayage actif d'une boîte de vitesse à commande manuelle automatisée reste immobile, avec un réglage qui est adapté à la réalisation du procédé selon l'une quelconque des revendications précédentes.

Start

Initialisierung
Istposition merken $X_{Start} = X_{act}$; Haltespannung merken $U_{test} = U_{acti}$
Initialisierung des Wartezählers cnt = 0;

S10

S11

Test $U_{up}$?

ja          nein

S12a          S12b

$\Delta U = + U_{step}$          $\Delta U = - U_{step}$

Initialisierung

S13

$|X_{act} - X_{start}| \geq \Delta X_{min}$?          ja

nein

S14

cnt++

S15

nein          cnt > wait ($\Delta t$)?

ja

S16

$U_{act} + = \Delta U$

S17

nein          $|U_{act}| > U_{max}$?          ja

Spannungsrampe

Adaption des Grenzwertes

S20

Ende

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10027330 A1
- WO 03074896 A
- WO 0163136 A
- DE 19823089